# EUROPEAN PATENT SPECIFICATION

(11) **EP 3 273 766 B1**
(45) Date of publication and mention of the grant of the patent: **08.04.2020**
(21) Application number: 15713167.3
(22) Date of filing: 25.03.2015
(51) Int. Cl.: A01D 34/73

(54) **IMPROVED IMPACT RESISTANCE FOR A ROBOTIC WORKING TOOL**
VERBESSERTE SCHLAGFESTIGKEIT FÜR EIN ROBOTISCHES ARBEITSWERKZEUG
RÉSISTANCE AUX IMPACTS AMÉLIORÉE POUR UN OUTIL DE TRAVAIL ROBOTISÉ

(43) Date of publication of application: 31.01.2018
(73) Proprietor: Husqvarna AB, 561 82 Huskvarna (SE)
(72) Inventor: STRIDH, Keijo, S-560 28 Lekeryd (SE)
(86) International application number: PCT/EP2015/056446
(87) International publication number: WO 2016/150503

(56) References cited:
- EP-A1- 0 395 624
- EP-A1- 1 358 786
- EP-A1- 2 625 947
- FR-A1- 2 823 635
- US-A- 2 898 725
- US-A1- 2010 101 201
- US-A1- 2012 318 114

## Description

### TECHNICAL FIELD

This application relates to fastening of tools, such as knives, to robotic work tools. In particular it relates to fastening means for holding rotating knives on robotic lawn movers.

### BACKGROUND

Traditionally, lawn mowers are used to cut the grass of lawns in gardens. On lawn mowers which are operated by motors, a rotating knife is commonly arranged under a motor of the lawn mower. Such a rotating knife has two cutting edges which sweep over the lawn to cut the grass.

When the lawn mower is moved over the grass to be cut, it happens that the cutting blade hits an obstacle, e.g. a rock. In that case it is important that the blade does not get damaged.. A hardened blade does not fulfill the standard IEC 60335-2-107, as it becomes brittle and may not handle the impact from an obstacle being hit without braking. Using a softer blade will flex and can handle the impact from an obstacle, but it will not remain sharp.

In prior art the problem with impacts is solved e.g. by different fastening methods, one example of which is incorporation of springs in the construction, which absorbs the energy from the impact and protects the cutting blade.

One example of a cutting blade arrangement is disclosed in US 8186135 B2 and includes an electrically powered two wheel mowing, trimming and edging apparatus. A rotating cutting head is cantilevered in front of the wheels, with a battery positioned behind the wheels to act as a counterweight to the cutting head. A caster below the battery allows easy maneuverability and permits trimming in corners. The cutting head contains both metal cutting blades and filament line, and the operator selects which cutting tool he wants based on the type of foliage to be cut. The cutting head easily rotates from the horizontal to the vertical, allowing the apparatus to be used as an edge trimmer. US-A-2 898 725 suggests a star-shaped knife which is possible to attach to a knife carrier in several different positions.

Another example of a prior art cutting blade arrangement is disclosed in WO 1998057533 A1 and includes a vegetation cutting tool such as a brush cutter, lawn mower, etc. includes a hub for mounting on the rotary shaft of the brush cutter and blades mounted thereto via pivoted links. In use the blades are held by rivets, having enlarged eccentric heads, which are received in keyhole-shaped slits in the blades. Thus the blades may be readily removed without tools by first rotating a blade and then translating it relative to the hub. The blades may be enlarged in width towards their distal ends which are radiused with a smaller radius than that of the cutting circle.

The cutting device for sugar cane harvester in US 2012/318114 A1 describes a solution to switch and fixated cutting blades to a cutting disc by providing a two oblong holes having a narrow section to lock the blade to the disc while receiving two fixing bolts on the cutting disc. The blades are configured to lock to the cutting disc safely. As a result the blades will not move in relation to the cutting disc, also called a support disc.

Patent application FR 2 823 635 A1, "Cutter blade system for lawn mowers comprises bearers with pins which fit into slots in blades, which are held in place by centrifugal force when mower is used" describes a fixation method for cutter blades for lawnmowers. The object of the invention is to ease replacement of cutter blades where the blade is rigid fixated to a distributor arm using a tool less mounting mechanism.

The lawn mower described in EP 2 625 947 A1 provides a lawn mower that can lift up lying grass through rotation of blades and cut the lifted grass, thereby improving the mowing performance. This lawn mower configured for mowing lawns on a ground has a drive shaft adapted to transmit a rotational driving force of its operating motor, three blades and a connecting member having a blade disk adapted to connect the blades with the drive shaft, a fan is integrally formed at the connecting member. Its blades are attached to the connecting member at a circumference of the connecting member and movable relative to the connecting member in a radial direction of the connecting member. In one embodiment of EP 2 625 947 A1, depicted in fig 8, the cutting disc has been equipped with long holes. When a circular blade contacts a stone or the like, it is displaced relative to the blade disk, thus the circular blade can avoid receiving excessive force.

The construction described in US 8186135 B2 comprises a spring which acts as damper. In WO 1998057533 A1 the construction comprises several joints and pivots. The more mechanical parts a construction comprises, the more fragile the construction gets. The spring and pivots described in prior art contributes to a less robust construction. There is thus a need for a cutting blade arrangement which is improved over prior art.

### SUMMARY

It is an object to eliminate or alleviate at least some of the problems referred to above, by providing a tool for a robotic work tool that is durable and simple in its structure.

In one aspect a tool adapted to be carried by a tool holder provided in a robotic work tool and comprising the features of claim 1 is provided. The tool comprising a slit arranged to receive a pin for attaching said tool to said tool holder, wherein said tool is movable such that the pin may be displaced within the slit and wherein the slit is symmetrically located within the tool with respect to at least one of the length and the width of the tool.

This tool is more durable than prior art tools, since it may move away from obstacles and thereby not break.

In a second aspect a robotic work tool comprising a tool holder and at least one tool as set out in claim 7 is provided.

In a third aspect a robotic work tool system comprising a robotic work tool as set out in claim 9 is provided.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The invention will be described in further detail under reference to the accompanying drawings in which:
Fig. 1 is a schematic overview of a robotic working tool according to one embodiment of the invention.
Fig. 2 is a schematic overview of a robotic working tool according to one embodiment of the invention.
Fig. 3 is a schematic illustration of parts of a robotic working tool according to one embodiment not forming part of the invention.
Fig. 4 is a schematic illustration of parts of a robotic working tool according to one embodiment not forming part of the invention.
Fig. 5 is a schematic illustration of parts of a robotic working tool according to one embodiment not forming part of the invention.
Fig. 6 is a schematic illustration of parts of a robotic working tool according to one embodiment not forming part of the invention.
Fig. 7 is a schematic illustration of parts of a robotic working tool according to one embodiment not forming part of the invention.
Fig. 8 is a schematic illustration of parts of a robotic working tool according to one embodiment of the invention.
Fig. 9 is a schematic illustration of parts of a robotic working tool according to one embodiment of the invention.
Fig. 10 is a schematic illustration of parts of a robotic working tool according to one embodiment of the invention.
Fig. 11 is a schematic illustration of parts of a robotic working tool according to one embodiment of the invention.
Fig. 12 is a schematic illustration of parts of a robotic working tool according to one embodiment of the invention.
Fig. 13 is a schematic illustration of parts of a robotic working tool according to one embodiment of the invention.
Fig. 14 is a schematic illustration of parts of a robotic working tool according to one embodiment of the invention.
Fig. 15 is a schematic illustration of parts of a robotic working tool according to one embodiment of the invention.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

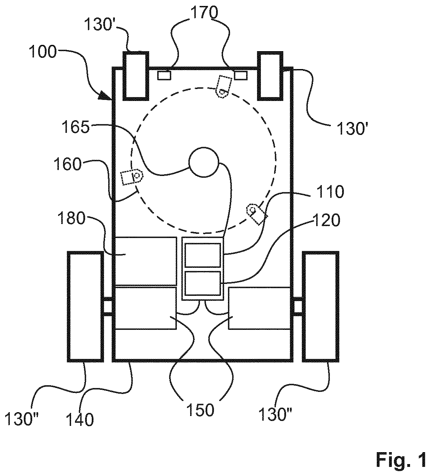

Fig. 1 shows a schematic overview of a robotic work tool 100 having a body 140 and a plurality of wheels 130. In the exemplary embodiment of Fig. 1 the robotic work tool 100 has four wheels 130, two front wheels 130' and two rear wheels 130". At least some of the wheels 130 are drivably connected to at least one electric motor 150. It should be noted that even if the description herein is focussed on electrical motors, combustion engines may alternatively or additionally be used possibly in combination with an electric motor.

In the example of Fig. 1, the rear wheels 130" are connected to one electric motor 150 each. This allows for driving the rear wheels 130" independently of one another which, for example, enables steep turning.

The robotic work tool 100 also comprises a controller 110. The controller 110 may be implemented using instructions that enable hardware functionality, for example, by using executable computer program instructions in a general-purpose or special-purpose processor that may be stored on a computer readable storage medium (disk, memory etc) 120 to be executed by such a processor. The controller 110 is configured to read instructions from the memory 120 and execute these instructions to control the operation of the robotic work tool 100. The controller 110 may be implemented using any suitable, publically available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

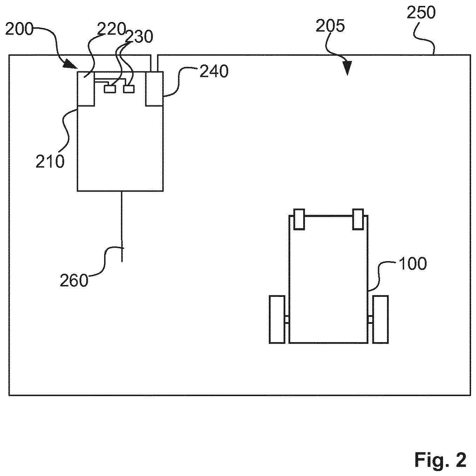

The robotic work tool 100 further may have at least one sensor 170, in the example of Fig. 1 there are two sensors 170, arranged to detect a magnetic field (not shown). The sensors are connected to the controller 110 and the controller 110 is configured to process any signals received from the sensors 170. The sensor signals may be caused by the magnetic field caused by a control signal being transmitted through a boundary wire (for more details on charging stations, control signals and boundary wires, see the description below with reference to Fig. 2). This enables the controller 110 to determine whether the robotic work tool 100 is inside or outside an area enclosed by a boundary wire.

The controller 110 is connected to the motors 150 for controlling the propulsion of the robotic work tool 100 which enables the robotic work tool 100 to service an enclosed area without leaving the area.

The robotic work tool 100 also comprises a work tool 160, which may be a grass cutting device, such as a rotating body 160 holding one or more blades driven by a cutter motor 165. The cutter motor 165 is connected to the controller 110 which enables the controller 110 to control the operation of the cutter motor 165. The robotic work tool 100 is, in one embodiment, a lawnmower robot. The robotic work tool 100 may also be any other robotic work tool having a rotating work tool that would benefit from a dampened arrangement.

The robotic work tool 100 also has (at least) one battery 180 for providing power to the motors 150 and the cutter motor 165. Alternatively or additionally the robotic work tool may have a fuel tank 180 for supplying fuel to any other type of engine 150.

Fig. 2 shows a schematic view of a robotic work tool system 200 comprising a charging station 210 and a boundary wire 250 arranged to enclose a working area 205, the working area 205 not necessarily being a part of the robotic work tool system 200, in which the robotic work tool 100 is supposed to service. The charging station 210 has a charger 220 coupled to, in this embodiment, two charging plates 230. The charging plates 230 are arranged to co-operate with corresponding charging plates (not shown) of the robotic work tool 100 for charging the battery 180 of the robotic work tool 100. The charging station 210 also has, or may be coupled to, a signal generator 240 for providing a control signal (not shown) to be transmitted through the boundary wire 250. As is known in the art, the control signal will generate a magnetic field around the boundary wire 250 which the sensors 170 of the robotic work tool 100 will detect. As the robotic work tool 100 (or more accurately, the sensor 170) crosses the boundary wire 250 the direction of the magnetic field will change. The robotic work tool 100 will thus be able to determine that the boundary wire has been crossed. Optionally, the charging station 210 also has a guide cable 260 for enabling the robotic work tool to find the entrance of the charging station 210.

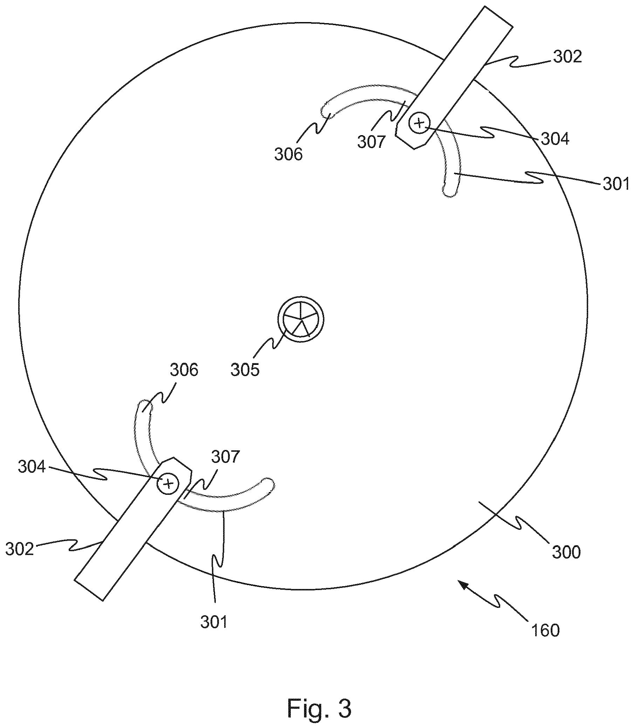

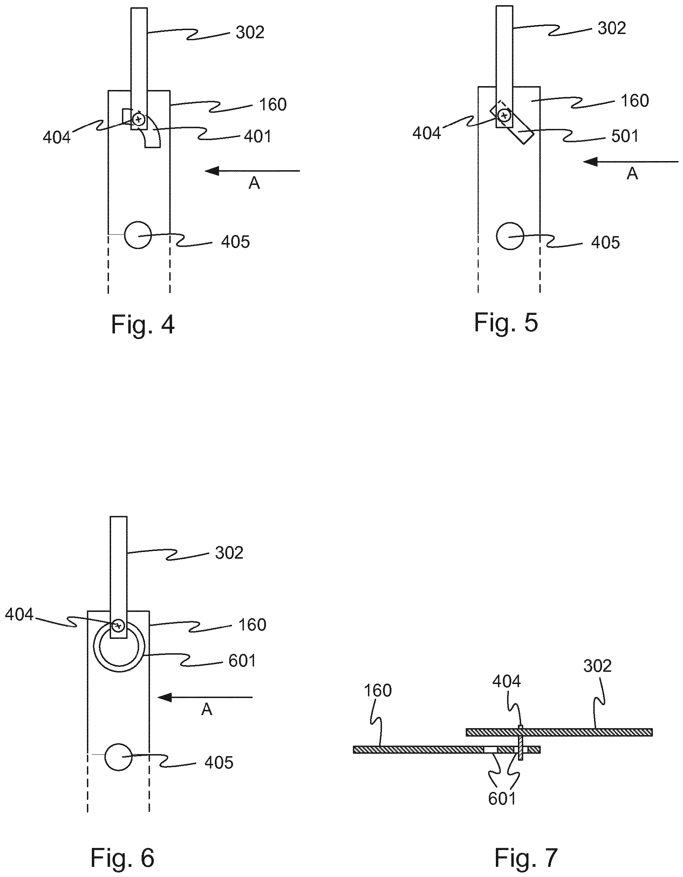

Fig. 3 shows a schematic view of a rotating blade holder 160, in accordance with one exemplifying embodiment. The blade holder 160 comprises a disc 300 and is adapted to be mounted to the robotic working tool 100 of Figs. 1 and 2. It should be noted that even though the description herein is focused on a disc being the rotating blade holder, other forms are also possible such as a two, three, four or five armed tool holder. The description of Figs. 4, 5 and 6 will focus on one arm of such a multi-armed rotating blade holder, but it should be noted that the teachings herein may be used with equal benefits in a blade holder of any shape, like an oval, a cross, a rod or a rectangle. The disc 300 is provided with two slits 301 for mounting of a blade (or possibly other tool) 302 into. In Fig. 3 the slit 302 is semi circular, but it should be noted that other forms are also possible, as will be illustrated with reference to Figs. 4, 5 and 6. The slit 302 has a radius which is not uniform with respect to the rotational axis 305 of the disc 300. In this embodiment, the radius of the slit 301 is uniform with respect to an imaginary center point located between the slit 301 and the rotational axis 305 of the disc 300. Other examples of slits having non-uniform radiuses or distances to the rotational axis are straight slits, U-shaped slits and many other.

Into the slit 301 a tool 302 is attached by a tool fastening means 304. In this exemplifying embodiment the tool is embodied by a cutting blade 302 and the fastening means by a pin 304. The tool attachment means will hereafter be referred to as a pin but it should be noted that other forms (such as bolts, screws, or studs) may also be used. It should also be noted that although Fig. 3 shows the blade holder 300 with two slits 301 and two blades 302, the teachings of this application may also be used with other numbers of slits 301 and blades 302. The extension of the slit may also vary between different embodiments.

The blade 302 is arranged to be able to rotate around the pin 304 when attached to the blade holder 300, i.e. the blade 302 will be rotatably attached to the blade holder 300. It will also be able to move along the slit 301.

An essential feature of the slit is that it has an operating end or position for the blade, which operating position 307 is located at the longest distance from within the slit 302 to the rotational axis 305 of the disc. Another essential feature is that the slit 302 has an extent which is non-uniform with respect to the distance from the slit 302 to the rotational axis 305 of the disc 300.

This ensures that, as the disc 300 rotates, the centripetal force will direct the blade 302 in a direction radially out from the blade holder towards the operating position 307, but upon an unintentional hit with an object during rotation of the blade holder 300, the blade 302 will be able to move along the slit 301 (and also or alternatively to rotate around the screw 304) towards a second end or position 306 of the slit 301. The blade 302 is thus allowed to move away from the object hit and possibly also to rotate around the pin. This dampens the impact between the blade 302 and the object being hit. Thereby, the blades 302 and the objects may be saved from being damaged.

Since the curvature of the slit 301 in Fig. 3 is larger than that of the rim of the disc 300, the blade 302 will be urged to the position 307 in the middle of the slit 301 by the centripetal force acting on the blade 302. When hitting an object and the blade 302 moves along the slit 301 to the other position 306, and finally returns to the initial position 307 in the middle of the slit 301 by the centripetal force. One advantage of implementing the tool attachment means 304 as a pin or screw is that a mounted screw or pin may be replaced by a new one. Thereby, a worn screw or pin could be replaced before being broken, which prevents the blade 302 from loosening from the blade holder 300, which increases security of the lawn mower. However, other alternative tool attachment means 304 may be implemented within the inventive concept, e.g. knobs, bolts or studs. Even if the blade holder 300 is illustrated as a disc in Fig. 3, the concept is not limited thereto, a designer is free to implement the blade holder 300 differently within the disclosed concept, e.g. as an oval, a polygon, or as an arm as has been discussed in the above, with a suitable number of slits 301 and tools 302.

Figs. 4, 5 and 6 show schematic views of other exemplifying embodiments of a blade holder 160, with a blade 302 attached thereto. In these Figs. the slit has the shape of a quarter of a circle 401 (Fig. 4), a diagonally placed rectangle 501 (Fig. 5) and a full circle 601 (Fig. 6). These all allow the blade or other tool 302 to move away from an object being hit as well as to rotate, and thereby reduce the impact between the tool and the object being hit. Fig. 7 is a side view of the embodiment in Fig. 6, showing the circular path 601 along which the blade 302 is able to move. With this arrangement the blade 302 is able both to rotate around the pin 404 and around the circular slit 601.

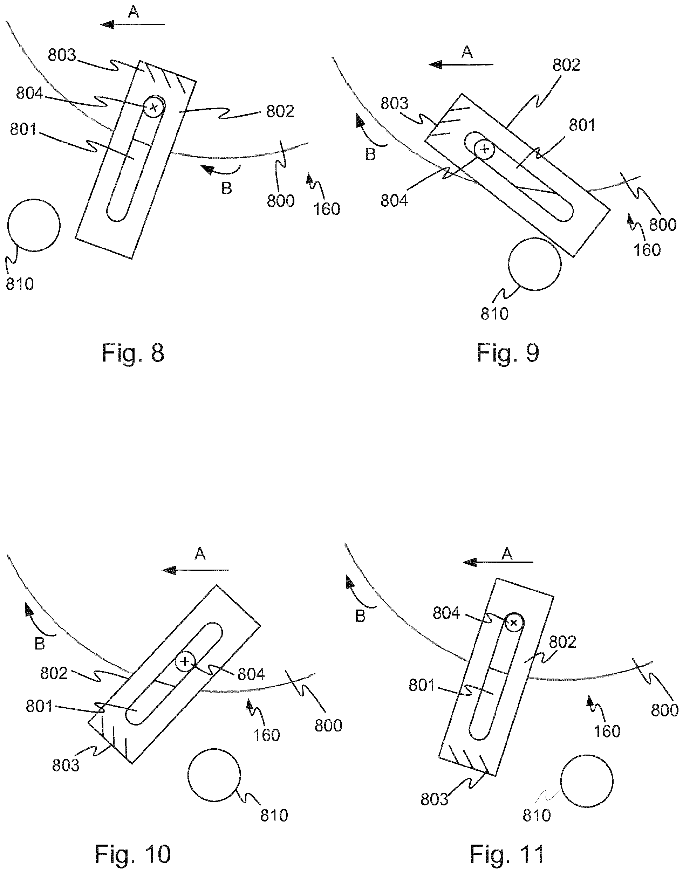

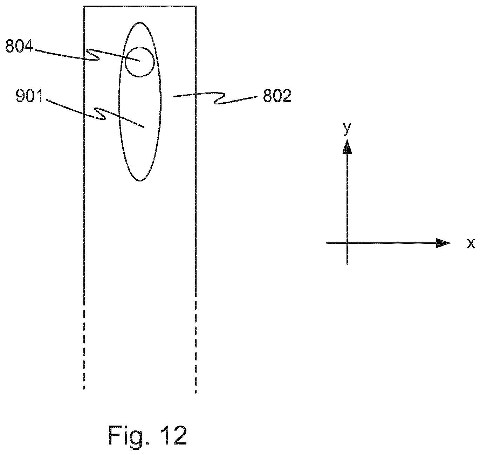

Fig. 8 shows a schematic view of a tool holder, such as a blade holder 160, in accordance with another exemplifying embodiment. The tool holder 160 comprises a disc 800 which is adapted to be mounted to a robotic working tool 100. In other embodiments the blade holder 160 may have other shapes, such as an oval, a cross, a rod or a rectangle. To the disc 800, by means of a fastening means 804, such as a pin, screw or other attachment means for attaching a tool to a disc, is attached a tool 802, which is provided with a slit 801. For illustrative purposes, one end 803 of the tool 802 is marked in Fig. 8 in order to indicate which way the tool 802 is oriented. The same blade holder 800 with blade 802 is shown in Figs. 9, 10 and 11. In this exemplifying embodiment the fastening means is embodied by a pin 804. The attachment means will hereafter be referred to as a pin but it should be noted that other forms (such as screws or bolts) also may be used. It should also be noted that although Fig. 8 shows the blade holder 800 with one blade 802, the teachings of this application may also be used with other number of blades 802. The slit 801 in the blade 802 is here embodied as a rectangle with rounded corners, but it may just as well be shaped differently, e.g. a rectangle with sharp corners or an oval. The slit 801 is here embodied as being symmetrically placed within the blade 802, but is may just as well be placed differently. As shown in Fig. 12, the blade 802 comprises a slit 901 that is asymmetrically placed within the blade 802 with respect to the x-axis (x indicating the length of the blade), whereas it is symmetrically placed with regard to the y-axis (y indicating the width of the blade). This blade 802 is able to rotate and turn back, and it will return to its original position. However, it will not, as the blade 802 described in connection with Figs. 8, 9, 10 and 11 be able to turn 180° and keep that position. The slit 901 may thus be asymmetrically placed with respect to the x-axis. It may also be asymmetrically shaped, as long as the blade 802 can move freely and not cause balance issues of the construction.

Now referring once more to Figs. 8, 9, 10 and 11, the blade 802 will be able to rotate around the pin 804 when attached to the disc 800, i.e. the blade 802 will be rotatably attached to the disc 800. It will also be able to move so as the pin 804 is displaced within the slit 801. Normally during operation, i.e. when the blade holder 800 is rotating, as shown in Fig. 8, the centripetal force will direct the blade 802 radially out from the blade holder 800, but upon an unintentional hit with an object 810 during rotation of the blade holder 800, the blade 802 will be able to rotate around the pin and at the same time move so as the pin is displaced within the slit 801. Thereby, the blade 802 and the object 810 may be saved from being damaged. This will be described in more detail in connection with Figs. 9, 10 and 11.

One advantage of implementing the tool attachment means 804 as a screw is that a mounted screw 804 may be replaced by a new one. Thereby, a worn screw 804 could be replaced before being broken, which prevents tools 802 from getting loose from the blade holder 800 which increases the security of the lawn mower. However, other alternative tool attachment means 804 may be implemented within the inventive concept, e.g. knobs or pins. Even if the blade holder 800 is illustrated as a disc in the Figs. 8, 9, 10 and 11, the concept is not limited thereto, a designer is free to implement the blade holder 800 differently within the disclosed concept, e.g. as an oval, a polygon, or as an arm, with a suitable number of tools 802 and slits 801.

Figs. 8, 9, 10 and 11 schematically show a sequence of a blade 802 hitting an object 810. In Fig. 8 the blade 802 is about to hit the object 810. The end 803 is directed towards the centre of the disc 800 and the blade 802 is directed radially out from the disc 800.

Further to Fig. 9, the blade 802 has hit the object 810, it has started to rotate around the screw 804 and it has moved a distance such that the pin 804 has been displaced within the slit 801. The blade 802 is thus no longer directed radially out from the disc 800. The end 803 is now closer to the edge of the disc 800. By this rotational manoeuvre and by moving such that the pin 804 is displaced within the slit 801 the blade 802 is avoiding the object 810 in a smooth manner, reducing the impact between the object and the blade, thereby possibly preventing them both from damage.

In one embodiment, the blade 802 is enabled to further move so that the pin is displaced within the extent of the slit. In this way the blade is enabled to more effectively dampen the impact between the object and the blade as this prevents the blade 802 from hitting the object from the reverse side as in the prior art when the blade 802 would rotate full-circle.

With reference to Fig. 10, the tool has rotated around the object 810, and the end 803 is now directed out from the disc 800. The blade 802 has passed the object 810. In Fig. 11 the blade 802 has completed the rotational manoeuvre and is once again in its initial position, directed radially out from the disc 800, but now with the end 803 outwards. The object 810 and the blade 802 have avoided damage. When the blade 802 is able to turn either of it short sides outwards both cutting edges are worn more symmetrically, which results in longer life time of the blade, which is an advantage.

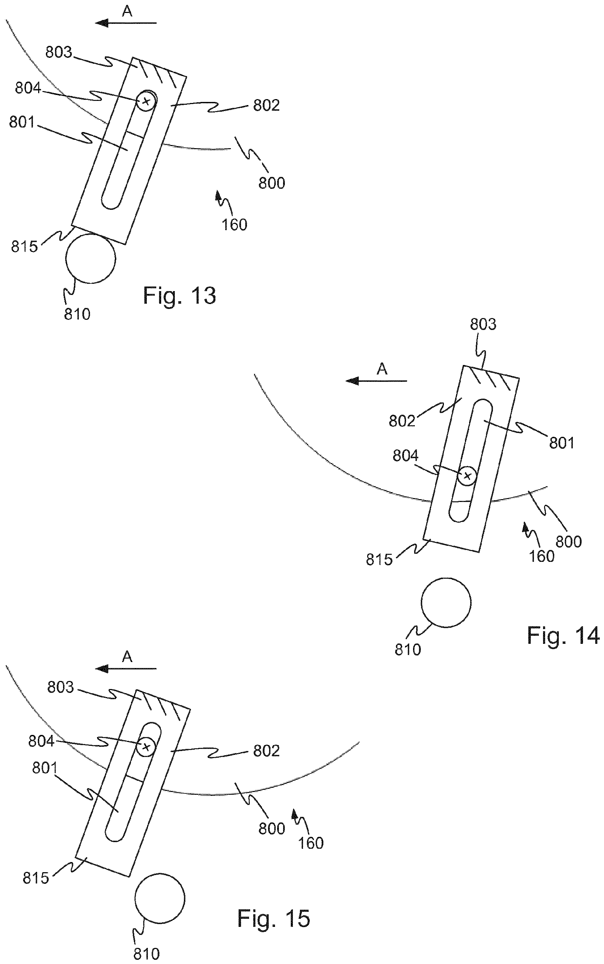

In Figs. 13, 14 and 15 the same arrangement as described in connection with Figs. 8, 9, 10 and 11 are shown, but in the scenario when the blade 802 hits an obstacle 810 with its short end. It should be noted that the distance between the object 810 and the disc 800 has been exaggerated for illustrative purposes. As can be seen in Fig. 13 the blade 802 hits the object 810 with its short side 815. If the blade 802 did not have the slit 801 it would remain stuck in this position, wedged between the disc 800 and the object 810, and the work tool 100 would stop or worse, the blade may break and potentially be thrown from the robotic work tool in an uncontrolled manner. But, thanks to the slit 802, the blade may, as can be seen in Fig. 14, move inwards, towards the centre of the disc 800 and thereby escape from the object 810. Fig. 15 shows when the work tool 100 has passed the object 810 and the blade 802 has moved outwards again, back towards its initial position. An advantage of a blade 802 as described herein is the increased maneuvering possibilities and inventive way of dampening the blade 802 such that it does not get damaged if it accidentally hits an object.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A tool (802) adapted to be carried by a tool holder (160) provided in a robotic work tool (100), the tool (802) being provided with exactly two cutting edges and comprising a slit (801; 901) arranged to receive a pin (804) for attaching said tool (802) to said tool holder (160), **characterized by** the tool (802) being movable such that the pin (804) may be displaced within the slit (801; 901) while the tool (802) is able to rotate around the pin and wherein the slit is symmetrically located within the tool (802) with respect to the length of the tool.

2. The tool (802) as claimed in claim 1, wherein the slit (801; 901) is substantially rectangular in shape, possibly with rounded corners.

3. The tool (802) as claimed in claim 1, wherein the slit (801; 901) is oval in shape.

4. The tool (802) according to any one of the preceding claims, the tool (802) being implemented as a grass cutting blade.

5. A tool holder (160) for a robotic work tool (100), the tool holder carrying at least one tool (802) according to any of the preceding claims.

6. The tool holder (160) according to claim 5, having the shape of one of: a circle, a rectangle, a cross, an oval, a rod, a disc, or it comprises multiple arms.

7. A robotic work tool (100) comprising a tool holder (160) according to claim 5 or 6, and at least one tool (802) according to any of the claims 1-4.

8. The robotic work tool (100) according to claim 7, said tool (802) being implemented as a grass cutting blade.

9. A robotic work tool system (200) comprising a robotic work tool (100) according to claim 8.

## Patentansprüche

1. Werkzeug (802), das dazu geeignet ist, von einem Werkzeughalter (160) getragen zu werden, der in einem Werkzeugroboter (100) vorgesehen ist, wobei das Werkzeug (802) mit genau zwei Schneidkanten versehen ist und einen Schlitz (801; 901) umfasst, der angeordnet ist, um einen Stift (804) aufzunehmen, um das Werkzeug (802) an dem Werkzeughalter (160) zu befestigen, **dadurch gekennzeichnet, dass** das Werkzeug (802) beweglich ist, so dass der Stift (804) innerhalb des Schlitzes (801; 901) verschoben werden kann, während das Werkzeug (802) sich um den Stift herum drehen kann, und wobei der Schlitz innerhalb des Werkzeugs (802) symmetrisch in Bezug auf die Länge des Werkzeugs angeordnet ist.

2. Werkzeug (802) nach Anspruch 1, wobei der Schlitz (801; 901) im Wesentlichen eine rechteckige Gestalt aufweist, gegebenenfalls mit abgerundeten Ecken.

3. Werkzeug (802) nach Anspruch 1, wobei der Schlitz (801; 901) eine ovale Gestalt aufweist.

4. Werkzeug (802) nach einem der vorhergehenden Ansprüche, wobei das Werkzeug (802) als eine Grasschnittklinge implementiert ist.

5. Werkzeughalter (160) für einen Werkzeugroboter (100), wobei der Werkzeughalter zumindest ein Werkzeug (802) nach einem der vorhergehenden Ansprüche trägt.

6. Werkzeughalter (160) nach Anspruch 5, der eine der Gestalten Kreis, Rechteck, Kreuz, Oval, Stab oder Scheibe aufweist, oder mehrere Arme umfasst.

7. Werkzeugroboter (100), umfassend einen Werkzeughalter (160) nach Anspruch 5 oder 6, und zumindest ein Werkzeug (802) nach einem der Ansprüche 1 bis 4.

8. Werkzeugroboter (100) nach Anspruch 7, wobei das Werkzeug (802) als eine Grasschnittklinge implementiert ist.

9. Werkzeugrobotersystem (200) umfassend einen Werkzeugroboter (100) nach Anspruch 8.

## Revendications

1. Outil (802) adapté pour être porté par un porte-outil (160) prévu dans un outil de travail robotisé (100), l'outil (802) étant muni exactement de deux bords de coupe et comprenant une fente (801 ; 901) agencée pour recevoir une broche (804) pour fixer ledit outil (802) audit porte-outil (160), **caractérisé en ce que** l'outil (802) est mobile de sorte que la broche (804) puisse se déplacer dans la fente (801 ; 901) tandis que l'outil (802) est capable de tourner autour de la broche et où la fente est située symétriquement dans l'outil (802) par rapport à la longueur de l'outil.

2. Outil (802) tel que revendiqué dans la revendication 1, dans lequel la fente (801 ; 901) a une forme essentiellement rectangulaire, éventuellement avec des coins arrondis.

3. Outil (802) tel que revendiqué dans la revendication 1, dans lequel la fente (801 ; 901) a une forme ovale.

4. Outil (802) selon l'une quelconque des revendications précédentes, l'outil (802) étant implémenté comme une lame de coupe d'herbe.

5. Porte-outil (160) pour un outil de travail robotisé (100), le porte-outil portant au moins un outil (802) selon l'une des revendications précédentes.

6. Porte-outil (160) selon la revendication 5, ayant une forme choisie parmi : un cercle, un rectangle, une croix, un ovale, une tige, un disque, ou il comprend de multiples bras.

7. Outil de travail robotisé (100) comprenant un porte-outil (160) selon la revendication 5 ou 6, et au moins un outil (802) selon l'une des revendications 1 à 4.

8. Outil de travail robotisé (100) selon la revendication 7, ledit outil (802) étant implémenté comme une lame de coupe d'herbe.

9. Système d'outil de travail robotisé (200) comprenant un outil de travail robotisé (100) selon la revendication 8.
